(19) Europäisches Patentamt
European Patent Office
Office européen des brevets

(11) **EP 2 341 631 A1**

(12) **EUROPEAN PATENT APPLICATION**

(43) Date of publication:
**06.07.2011 Bulletin 2011/27**

(51) Int Cl.:
**H04B 1/28** (2006.01)     **H04B 1/00** (2006.01)

(21) Application number: **10152187.0**

(22) Date of filing: **29.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.12.2009 EP 09180972**

(71) Applicant: **NXP B.V.**
**5656 AG Eindhoven (NL)**

(72) Inventors:
• **Pavlovic, Nenad**
  **5656 AE Eindhoven (NL)**
• **van Sinderen, Jan**
  **5656 AE Eindhoven (NL)**
• **Brekelmans, Johannes Hubertus Antonius**
  **5656 AE Eindhoven (NL)**

(74) Representative: **Krott, Michel**
  **NXP B.V.**
  **High Tech Campus 32**
  **5656 AG Eindhoven (NL)**

(54) **Tuner apparatus with digital-to-analog-converter mixer using single local oscillator**

(57)     The present invention relates to a tuning method and tuner apparatus having a plurality of frequency conversion stages for concurrently receiving more than one channel. To avoid disturbance by oscillator pulling, a multi-phased local oscillator signal required by sub-mixers of a DAC mixer share the same timing reference. To minimize the complexity, die area and power dissipation of the local oscillation generation, a tuning offset is accepted from each of the down-conversion stages, and loss of receiver performance by the tuning offset is avoided by a control function for controlling the receiver circuit to process an increased dynamic range introduced by the tuning offset.

Fig. 6

EP 2 341 631 A1

Printed by Jouve, 75001 PARIS (FR)

## Description

FIELD OF THE INVENTION

The present invention relates to a tuning method and tuner apparatus having a plurality of frequency conversion stages for concurrently receiving more than one channel.

BACKGROUND OF THE INVENTION

The television (TV) tuner market shows an increasing demand for so-called "multi-stream solutions" involving tuners capable of concurrently receiving more than one TV channel. A typical multi-stream application is the "watch and recording" feature in digital versatile disc (DVD) recorders, set top boxes and personal computer (PC) add-on cards. Another application is cable modems with increased data throughput obtained by bonding together data received through multiple channels (i.e. "channel bonding"). Such applications are specified by both DOCSIS3.0 and DOCSIS4.0 standards.

To reduce complexity of such multi-stream solutions, a plurality of tuners can be integrated into a single tuner module. Such integration gives rise to mutual interference by radio frequency (RF) signal leakage of one tuner into the other. "RF", as used herein, refers to signals of frequencies used for wireless transmission.

More specifically, interference is often caused by coupling of oscillator signals.

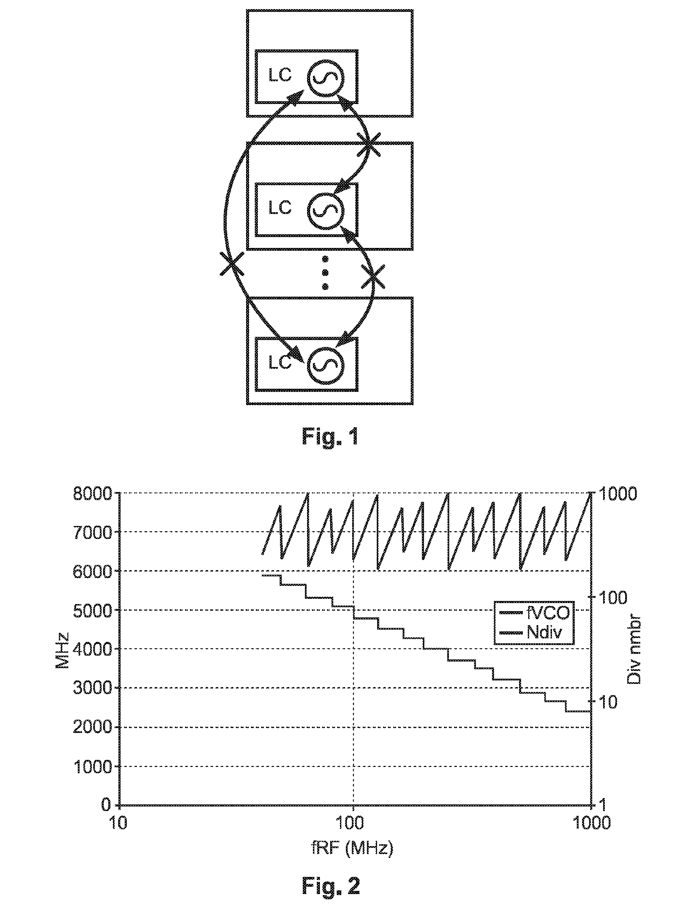

Fig. 1 shows a schematic block diagram of a multi-stream solution, where each block corresponds to a sub-tuner comprising a dedicated LC oscillator. The errors indicate mutual interference by RF signal leakage from one LC oscillator to the other LC oscillator. As each tuner comprises a frequency conversion stage with an associated local oscillation signal generation by the LC oscillator, and several frequency conversion stages need to be placed next to each other in a small form factor (for example on the same die), the LC oscillators of different streams may easily interact. When the frequencies of two LC oscillators come in close proximity, the oscillators have tendency to lock onto one another, a phenomenon known as "oscillator pulling" and causing oscillator side band spurs that mutually disturb the reception of TV channels. Such disturbance will occur at discrete frequencies, but as the local oscillator mixer frequency is often generated from an LC oscillator at a much higher frequency with a programmable frequency divider, there may be numerous spots where problems will arise.

Fig. 2 shows a diagram indicating local oscillation generation from an LC oscillator using a programmable divider. The staircase shaped lower line indicates the relationship between the dividing number $N_{dIv}$ and the RF tuning frequency $f_{RF}$. The upper line indicates the oscillator frequency $f_{vco}$ and its relation to the RF tuning frequency $f_{RF}$.

Practical monolithic tuner realizations have shown it very difficult to avoid oscillator pulling.

For frequency conversion in TV tuners that have to deal with wideband input spectra, for example from 50 to 1000 MHz, it is beneficial to apply a switching mixer with rejection properties on higher odd mixing harmonics. The use of such a so-called harmonic reject mixer (HR mixer), as described for example in the US 7190943 B2, allows to reduce efforts on RF filtering. Conventional wideband receivers achieve large image and harmonic rejection ratios by using off-chip high selectivity discrete LC filters that track the frequency of the desired channel, as described for example in "A Three-Band-Tuner for Digital Terrestrial and Multistandard Reception", S. Sim et al., IEEE Trans. Consumer Electronics, vol. 38, no. 3, pp. 709-717, August 2002.

The HR mixer approximates a sine wave mixing waveform by selectively combining the outputs of several switching mixers driven by multi-phased local oscillator (LO) signals. The HR mixer can be fully integrated on a chip and thus reduces complexity and costs.

The weighing of sub-mixers which operate together inside a HR mixer can be structured as that of a generic digital-to-analog converter (DAC). Combining the functionality of a HR mixer and a DAC leads to a so-called DAC mixer. The local oscillator signal becomes a digital code representing a "walking" sampled sine wave. The individual signals driving each segment mixer or sub-mixer are still square waves, ensuring a low-noise and linear operation. To generate the sine-wave mixing waveform, a digital sinusoidal LO signal can for example be generated using a direct digital frequency synthesizer (DDFS).

The combination of a DDFS with a DAC mixer (so-called "DDFS-DAC mixer") as described for example in the US 7358855 B2 or in "A DDFS Driven Mixing-DAC with Image and Harmonic Rejection Capabilities", A. Maxim et al., Solid-State Circuits Conference, 2008, ISSCC 2008, Digest of Technical Papers, IEEE International, 3 - 7 February 2008, pp. 372-621, represents a highly programmable building block that achieves both harmonic rejection and low-noise down-conversion. Instead of cancelling only specific harmonics, a much larger number of harmonics can be suppressed.

The attraction of the DDFS-DAC mixer concept is in the harmonic rejection mixing properties and the ability to flexibly synthesize a large range of frequencies from a main digitally controlled oscillator (DCO) having relatively small tuning range. A DDFS, from its principle functioning, can operate from a fixed frequency reference source to generate arbitrary output frequency. However, spur performance will not be adequate for TV reception. It can be made adequate by restricting the tuning to frequencies equal to the DCO frequency $f_{DCO}$ times a ratio of two integer-number parameters:

$$f_{MIXER} = f_{DCO} \frac{Cycles}{Nprog}$$

where *Nprog* denotes the bit length of a programmable counter and *Cycles* denotes the number of periods of the mixing waveform in a fundamental interval.

For multi-stream TV applications it is desired that the LO signal for the different streams is synthesized from the same master DCO. That means that the frequency of the DCO should be fixed. Re-tuning the DCO while receiving a channel will cause an unacceptable disruption of the signal stream. With a fixed DCO frequency, the restricted tuning resolution means that the streams received may not be at their nominal IF frequency but suffer from a tuning offset. To reduce such tuning offset requires an enhanced tuning resolution that can be achieved by increasing the programmable counter length (*Nprog*). This will, however, result in an unacceptable increase of power dissipation and die area needed for the programmable counter and the look-up table.

SUMMARY OF THE INVENTION

It is an object of the present invention to provide an improved tuner apparatus and tuning method with a better overall compromise between on one hand die area and power dissipation and on the other receiver performance.

In a first aspect of the present invention a tuner apparatus having a plurality of frequency conversion stages for concurrently receiving more than one channel is presented, said apparatus comprising:

- a multi-stream receiver circuit for receiving a plurality of radio frequency signals, converting said radio frequency signals to a plurality of lower frequency signals, and performing analog-to-digital conversion of said lower frequency signals, said receiver circuit comprising a plurality of digital-to-analog converter mixers (30) with image and harmonic rejection properties, each having a plurality of sub-mixers (201);
- signal generating means (10) for generating, from the output of a shared fixed frequency master oscillator (34), local oscillator signals to be supplied to said plurality of sub-mixers (201); and
- control means (50) for adapting the operation of said multi-stream receiver circuit so as to counteract a loss of receiver dynamic range caused by a tuning offset resulting from the use of said fixed frequency master oscillator (34).

In a further aspect of the present invention a method of tuning a tuner apparatus having a plurality of frequency conversion stages for concurrently receiving more than one channel is presented, comprising:

- using a digital-to-analog-converter mixer (20) with harmonic rejection properties and a plurality of sub-mixers (201);
- generating local oscillator signals to be supplied to said sub-mixers (201) from the output of a shared fixed frequency master oscillator (34)
- adapting the operation of a receiver circuit to increase a dynamic range so as to counteract a loss of dynamic range caused by a tuning offset resulting from the use of said fixed frequency master oscillator output.

Accordingly, instead of increasing the tuning resolution by increasing the programmable counter length in the LO generation to reduce the tuning offset, a better overall compromise can be obtained by not trying to reduce the tuning offset but instead adapting the receiver to handle the tuning offset without loss of performance. Thus, a multi-stream tuner apparatus is proposed using a DAC mixer for each of the conversion stages and, to avoid disturbance by oscillator pulling, sharing a fixed frequency DCO as a timing reference between the plurality of conversion stages. The receiver complexity is minimized by accepting an IF signal with a nominal tuning offset from each of the conversion stages. To avoid a loss of receiver performance by the nominal tuning offset, the receiver circuit is adapted to counteract the loss of dynamic range caused by the deviation from nominal of the intermediate frequency (IF)

More specifically, the said loss of dynamic range may result from the widening of the bandwidth of the filter after the mixer, the widening required to better accommodate the shifted IF spectrum position of the mixer output signal as a result of the tuning offset. When the post mixer filter bandwidth needs to be increased, more of the receiver available dynamic range will be consumed by unwanted signals that are suppressed less.

The receiver circuit may therefore be equipped with a tunable IF band pass filter. By tuning the IF band pass filter response in accordance with the tuning offset an optimal receiver dynamic range can be maintained. Since the tuning offset is known a priori the center frequency of the bandpass filter can be shifted accordingly.

As a further or alternative option, the dynamic range of the analog-to-digital converter (ADC) may be increased by increasing the number of bits, the sampling frequency and/or the signal bandwidth in order to convert the sum of wanted and unwanted IF signals from the mixer with an increased bandwidth post filter without a loss of performance.

As a further or alternative option, the receiver circuit may be configured to increase the capability of a channel decoder to filter and down-convert an IF spectrum to include the extra frequency range introduced by the tuning offset.

The above method according to the further aspect may be implemented as a software routine and thus a computer program product comprising code means for carrying out the steps of the method when run on a computing device provided in the tuner apparatus. The computer program product may be stored or distributed on a suitable medium, such as an optical storage medium or a solid-state medium supplied together with or as part of other hardware, but may also be distributed in other forms, such as via the Internet or other wired or wireless telecommunication systems.

Preferred embodiments of the invention are defined in the dependent claims. It shall be understood that the tuner apparatus of claim 1 and the method of claim 8 have similar and/or identical preferred embodiments as defined in the dependent claims.

DETAILED DESCRIPTION OF THE INVENTION

The present invention is further elucidated by the following figures and examples, which are not intended to limit the scope of the invention. The person skilled in the art will understand that various embodiments may be combined.

BRIEF DESCRIPTION OF THE DRAWINGS

These and other aspects of the invention will be apparent from and elucidated with reference to the embodiment(s) described hereinafter. In the following drawings

    Fig. 1 shows a schematic block diagram indicating oscillator pulling in multi-stream receivers;
    Fig. 2 shows a diagram indicating the generation of a mixer local oscillator signal by means of a tunable oscillator followed by a programmable divider;
    Fig. 3 shows a block diagram of a DAC mixer divided in local oscillator signal generation and mixer circuits;
    Fig. 4 shows examples of sampled mixing waveforms generated with a DAC mixer;
    Fig. 5 shows a table indicating maximum tuning offsets over tuning range as a function of a programmable counter length;
    Fig. 6 shows a simplified schematic block diagram for a single stream TV receiver according to the present invention; and
    Fig. 7 shows frequency spectra of the receiver IF output signal with and without tuning offset.

DETAILED DESCRIPTION OF THE DRAWINGS

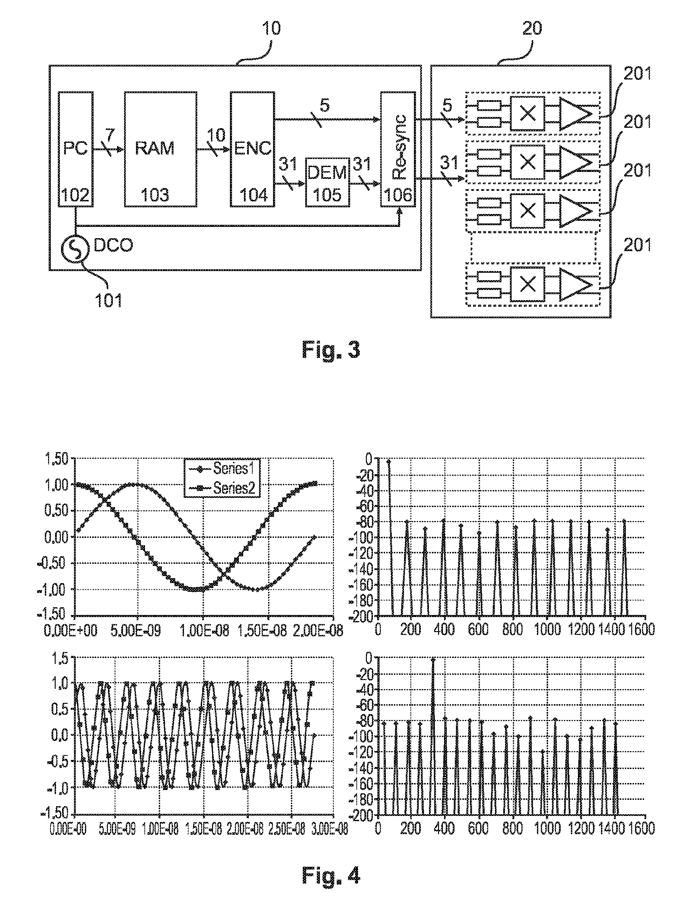

Fig. 3 shows a schematic block diagram of a 10-bit DAC mixer divided in an LO generation circuit 10 and a plurality of sub-mixers 201 that form the DAC mixing circuit 20. Fig 3 represents an embodiment preferred for application in a TV tuner. However, it is clear to the skilled person that this structure can be used for any kind of receiver application.

The sub-mixers 201 are passive weighted and connected in parallel. The DAC mixing circuit 20 is driven from a LO generator circuit 10 that uses a sine wave lookup table provided in a random access memory (RAM) 103 which is addressed by a programmable counter (PC) 102. A DCO 101, which may also be arranged externally, generates a frequency reference signal supplied to at least one programmable counter 102 and re-synchronization circuit 106. A compromise between power-dissipation and harmonic-rejection performance is achieved with DAC mixer circuit segmentation with 5-bit binary encoded section and a 5-bit thermometer encoded section. The summed 10 bits are chosen in the embodiment to achieve >70 dBc distance between the main mixing frequency component and the spurs that result from the sampled nature of the mixing waveform. The achieved harmonic rejection depends on the DAC linearity and the DDFS data re-synchronization accuracy.

Generally, the linearity of a DAC used in a mixing DAC architecture is dependent on factors comprising the area of the DAC, the number of bits of the DAC and whether the DAC is segmented and, if so, what encoding techniques are utilized. Usually, a larger area DAC provides better DAC linearity (i.e., improved integral non-linearity (INL)), which has a direct impact on spur free dynamic range (SFDR) performance of the DAC. Unfortunately, larger devices usually have increased parasitic capacitance values, which may adversely affect operating frequency and degrade higher frequency image rejection performance. Increasing the number of bits in a DAC also generally improves the mixer linearity. However, increasing the bits of a DAC normally requires that the area of the DAC similarly increases, which leads to an increased parasitic capacitance. Furthermore, additional bits require additional signal parts from the LO generation circuit 10 to the DAC mixing circuit 20, which increases power requirements of the device.

As may be derived from Fig. 3, the DAC mixing circuit 20 includes a thermometer encoded section and a binary encoded section. While the implementation of a full binary encoded DAC results in a minimum number of digital bit lines and, thus, lowers power consumption, a differential non-linearity (DNL) performance of a full binary encoded DAC is relatively poor due to the mismatch of the MSBs, which may cause a strong secondary distortion that dominates the DAC SFDR performance. On the other hand, a full thermometer encoded DAC provides better DNL performance than the binary encoded DAC and provides a relatively high value SFDR performance, limited by third-order distortion. However, full thermometer decoded DAC implementations increase power dissipation, due to the large number of parallel DDFS digital signal parts.

A receiver with both high mixing DAC linearity and low power dissipation may be achieved by using a segmented DAC in which a predetermined number of MSBs are thermometer encoded while another predetermined number of LSBs are binary encoded. For example, a 10-bit DAC may include 5 thermometer-encoded bits and 5 binary-encoded bits, as in the present embodiment.

To improve blocking performance, that is the suppression of the mixing DAC of spurious frequencies that arise from the sampled nature of the mixing waveform, a dynamic element matching (DEM) technique may be implemented by means of a DEM scrambler 105 adapted to scramble the order in which the thermometer bits are used for a given code. That is, using different thermometer units for a given digital code averages the DAC mismatch errors and thus disperses the spurious frequency tones. It should be appreciated that a number of different scrambling techniques may be employed. Implementing DEM scrambling of the DDFS digital code output results in a spreading of the LO harmonics into noise, thus improving the blocking performance of the mixing DAC. Ultimately, the thermometer scrambling may disperse the tones into the white noise. For example, a pseudo-random sequence generator may be employed in the DEM scrambler to spread the tones.

The digital LO signal read out from the RAM 103 is supplied to an encoder circuit (ENC) 104 where it is split into a thermometer encoded section (lower branch) and a binary encoded section (upper branch). The re-synchronization circuit 106 re-establishes synchronization of the two branches and applies their data to the 10-bit DAC mixing circuit 20.

The sub-mixers 201 of Fig. 3 are passive mixers each provided with their own IF amplifier. Segmentation into unit weight cells reduces susceptibility to IF amplifier input impedance. The output signals of the segment IF amplifier are summed in a second IF amplifier stage (not shown).

Fig. 4 shows diagrams with examples of sampled mixing waveforms generated with a 10-bit DAC mixer shown by Fig. 3. In the upper example the mixer frequency $f_m$ = 54 MHz and the reference frequency $f_{DCO}$ = 3024 MHz, which corresponds to a number of periods of the mixing waveform Cycles = 1 in the fundamental interval and a programmable counter length $N_{prog}$ = 56. In the lower example $f_m$ = 331 MHz and $f_{DCO}$ = 3016 MHz ($N_{prog}$ = 82, Cycles = 9).

The synthesized mixing frequency can be calculated as

$$f_m = f_{DCO} \frac{Cycles}{Nprog}$$

Both parameters $N_{prog}$ and Cycles are preferably chosen as integer numbers, to prevent spurs from an unclosed sequence and subsequent aliasing. With suitable values for these parameters a large number of frequencies can be generated. However, the frequency resolution is not infinite and some tuning of the DCO 101 is needed to keep the tuning offset below a predetermined threshold, e.g., 100 kHz. This threshold may represent the maximum acceptable tuning offset for TV reception. To tune any channel e.g. in a range 40 to 1000 MHz within ±100 kHz with a 7-bit programmable counter requires a tunability of about ±3.5%.

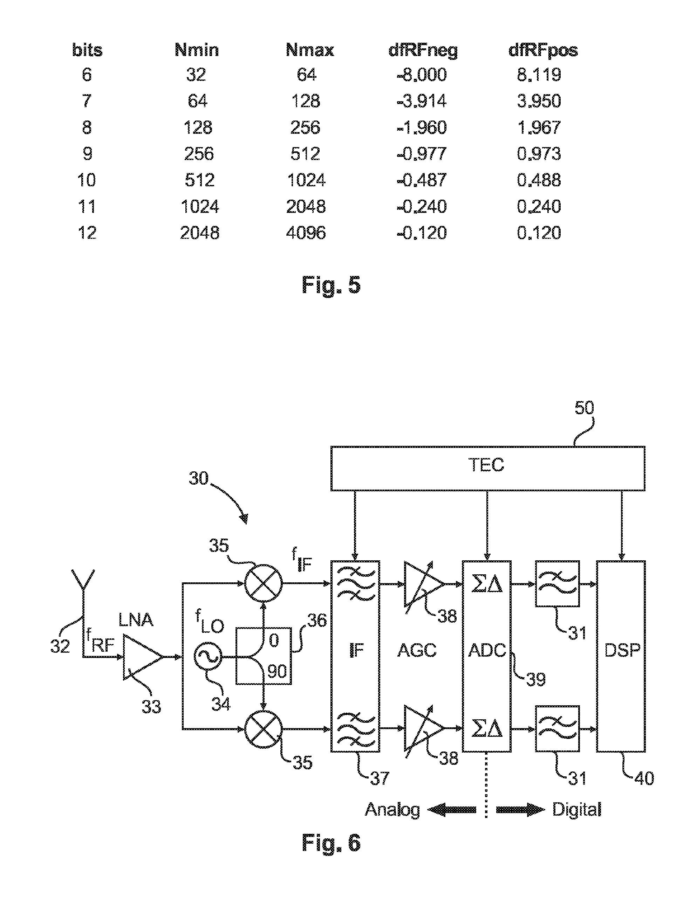

Fig. 5 shows a table indicating a maximum tuning offset (MHz) in the tuning range 40 to 1040 MHz (in steps of 10 kHz) as a function of the programmable counter length and at a fixed DCO frequency $f_{DCO}$ = 3.0 GHz. To ensure sufficient samples to represent the sine wave mixing waveform, the minimum counter setting is set to 50% of the maximum setting.

As can be gathered from Fig. 5, when selecting a 7-bit programmable counter, a tuning offset as large as ±4 MHz needs to be absorbed. This tuning offset is large compared to the channel bandwidth which may be 6 or 8 MHz depending on the TV standard. To enable the receiver to handle this kind of tuning offset, several modifications are proposed in the receiver of the preferred embodiment.

Fig. 6 shows a simplified TV receiver block diagram with the suggested modifications. Here, I-Q mixer and a single LO source 30 represent the DAC mixer functionality shown in Fig. 3.

An RF frequency $f_{RF}$ is received via an antenna 32 and supplied to a low noise amplifier (LNA) 33. The amplified signal is converted in respective mixer circuits 35 which are supplied with a local oscillator signal from a local oscillator 34 via a 90° phase shift circuit 36 to obtain an inphase (I) component (upper branch) at frequency $f_{IF}$ and a quadrature (Q) component (lower branch). The two components are band pass filtered in a (complex) IF filter 37 and are then amplified in respective automatic gain control (AGC) amplifiers 38 and supplied to an analog-to-digital converter (ADC) 39 (which may be a sigma-delta converter). The ADC 39 separates the analog front-end part from the digital processing part. The digital inphase and quadrature phase components are supplied to respective digital filters 31 and are then processed in a digital signal processor (DSP) 40. As an alternative option, this processing may be implemented by a second DSP. It is noted that Fig. 6 only shows only one tuner branch of a plurality of tuner branches needed by a multi-steam TV receiver. In a multi-stream implementation the LNA 33 may be shared between a plurality of DAC mixers with their subsequent processing blocks.

The receiver circuit of Fig. 6 is enabled to handle the above tuning offset by providing a tuning offset control 50 adapted to enable manual or automatic control of at least one of the IF filter 37, the ADC 39 and the DSP 40. Both for Zero-IF and Low-IF architectures, the IF filter 37 provides attenuation of strong nearby unwanted channels (interferers) that otherwise will consume large parts of the dynamic range of the following IF amplifier 38 and ADC 39. By tuning the band pass filter response of the IF filter 37 to fit the shifted IF spectrum position, the tuning offset control 50 provides the capability of maintaining an optimal receiver dynamic range. The tuning offset is known a priori so that the IF filter 37 can be shifted accordingly, e.g. by using a calibration mechanism to accurately tune the IF filter 37. As an example, the IF filter 37 may be implemented as a complex band pass filter.

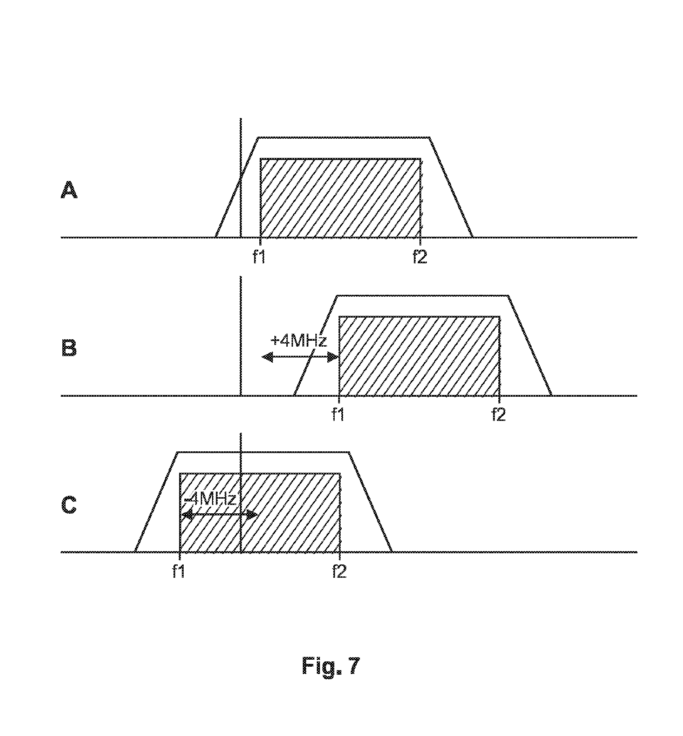

Fig. 7 shows different cases of Low-IF frequency spectra, wherein A relates to a nominal Low-IF case and B and C relates to the same Low-IF case but with tuning offsets of +4 MHz and -4 MHz, respectively. Accordingly, the tuning offset control 50 serves to adjust the IF filter 37 to compensate for the shift of the IF frequency spectra depicted in Fig. 7.

According to an additional or alternative second modification, the tuning offset control 50 provides a control mechanism for the ADC 39. If a tunable IF bandpass filter is used, the dynamic range hardly changes. Only clock frequency and bandwidth of the ADC 39 may need to be changed if they no longer fit (as described below). If a low pass filter type of post mixer filter is used, the dynamic range requirement increases more significantly, as more unwanted signals need to be handled. In case the TV receiver uses a Low-IF architecture, which for the ADC 39 is more difficult than the Zero-IF architecture, the bandwidth of the down-converted TV signal would for example be between 1 and 9 MHz (in case of a 8 MHz channel spacing) and the required dynamic range would be 80 dB. The tuning offset of $\pm 4$ MHz of Fig. 7 would mean that the spectrum can shift to 5 and 13 MHz (or down to -3 and +5 MHz). To obtain the same 80 dB of dynamic range when using a Nyquist sampling requires $20*\log(13/9) = 3.2$ dB more dynamic range (SNDR) given that the upper signal frequency is now 13 MHz instead of 9 MHz. However, when the ADC 39 is of a band pass sigma delta type, the dynamic range requirements do not change, but the centre frequency of the ADC 39 needs to be retuned by the tuning offset control block 50.

The dynamic range of the ADC 39 can be adjusted by controlling at least one of bandwidth, sampling frequency and (effective) number of bits. This adjustment can be achieved by a control loop or by design measures if the ADC 39 for cost reasons is operated at or near its maximum capabilities or by both. Thus, depending on the tuning offset, the ADC 39 can be controlled or adjusted or modified to meet the most stringent requirements.

As another alternative or additional option, the capability of a channel decoder provided by the DSP 40 to filter and down-convert the IF spectrum (in the digital domain) can be adjusted or modified or redesigned to include the extra range introduced by the tuning offset. The changed maximum capabilities can be introduced e.g. by a suitable hardware redesign.

Accordingly, the proposed direct-conversion multi-stream TV tuner according to the above embodiment uses a DAC mixer for each of its conversion stages. To avoid disturbance by oscillator pulling, the multi-phase LO signals required by the DAC sub-mixers share the same timing reference, for example a PLL controlled LC oscillator. To minimize complexity, die area, and power dissipation of the LO generation, a nominal tuning offset is accepted from each of the down conversion stages.

To avoid a loss of receiver performance by the nominal tuning offset the tuning offset control block 50 is provided to modify the receiver circuitry stage by at least one of the above described options.

The tuning offset control (control means) can be any means by which the receiver circuit can be technically influenced to be capable of processing an increased dynamic range (of a processed signal).

That is, the receiver circuit can be influenced by the tuning offset control to allow processing of an increased dynamic range. The tuning offset control is intended to cover any circuit or chip design measures as well, rather than being limited to a control loop. Consequently, the tuning offset control could be any electrical or mechanical influence on the receiver design or operation, by means of which the dynamic range which can be processed by the receiver is increased.

It is to be noted that the above embodiments are not limited to the described TV tuner, but can be used for any multi-stream broadcast reception, such as frequency modulation (FM) radio, amplitude modulation (AM) radio etc. The embodiments may thus vary within the scope of the attached claims.

In summary, a tuner apparatus and tuning method have been described, wherein tuner apparatus has a plurality of frequency conversion stages for concurrently receiving more than one channel. To avoid disturbance by oscillator pulling, a multi-phased local oscillator signal required by sub-mixers of a DAC mixer share the same timing reference. To minimize the complexity, die area and power dissipation of the local oscillation generation, a tuning offset is accepted from each of the down-conversion stages, and loss of receiver performance by the tuning offset is avoided by a control function for controlling the receiver circuit to counteract the detrimental influence of tuning offset on the required receiver internal dynamic range.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single item or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

**Claims**

1. A tuner apparatus having a plurality of frequency conversion stages for concurrently receiving more than one channel, said apparatus comprising:

— a multi-stream receiver circuit for receiving a plurality of radio frequency signals, converting said radio frequency signal to a plurality of lower frequency signals, and performing analog-to-digital conversion of said lower frequency signals, said receiver circuit comprising a plurality of digital-to-analog converter mixers (30) with image and harmonic rejection properties, each having a plurality of sub-mixers (201);
— signal generating means (10) for generating, from the output of a shared fixed frequency master oscillator (34), local oscillator signals to be supplied to said plurality of sub-mixers (201); and
— control means (50) for adapting the operation of said multi-stream receiver circuit so as to counteract a loss of a receiver dynamic range caused by a tuning offset resulting from the use of said fixed frequency master oscillator (34).

2. The apparatus according to claim 1, wherein said control means (50) is adapted to allow tuning an intermediate frequency filter (37) to fit a shifted intermediate frequency spectrum position by a calibration mechanism.

3. The apparatus according to claim 1 or 2, wherein said control means (50) is adapted to increase a dynamic range of an analog-to-digital converter (39) in accordance with said tuning offset.

4. The apparatus according to claim 3, wherein said analog-to-digital converter (39) is of a band pass sigma delta type.

5. The apparatus according to any one of the preceding claims, wherein said control means (50) is adapted to provide an increased capability of a channel decoder to filter and down-convert an intermediate frequency spectrum to include an extra range introduced by said tuning offset.

6. The apparatus according to any one of the preceding claims, wherein said tuner apparatus comprises a television tuner.

7. The apparatus according to any one of the preceding claims, wherein said signal generating means (10) comprises a phase-locked-loop controlled LC oscillator.

8. A method of tuning a tuner apparatus having a plurality of frequency conversion stages for concurrently receiving more than one channel, said method comprising:

— using a digital-to-analog-converter mixer (20) with harmonic rejection properties and a plurality of sub-mixers (201);
— generating local oscillator signals to be supplied to said sub-mixers (201) from the output of a shared fixed frequency master oscillator (34)
— adapting the operation of a receiver circuit to increase a dynamic range so as to counteract a loss of dynamic range caused by a tuning offset resulting from the use of said fixed frequency master oscillator output.

9. The method according to claim 8, wherein said adaptation comprises tuning a tunable intermediate frequency filter (37) to fit a shifted intermediate frequency spectrum position by a calibration mechanism.

10. The method according to claim 8 or 9, wherein said adaptation comprises providing an analog-to-digital converter (39) having an increased sampling frequency and signal bandwidth to achieve an increased dynamic range.

11. The method according to any one of claims 8 to 10, wherein said adapting comprises configuring said receiver circuit to increase the capability of a channel decoder to filter and down-convert an intermediate frequency spectrum to include an extra range introduced by said tuning offset.

12. A computer program product comprising code means for carrying out the steps of method claim 8 when run on a computing device.

Fig. 1

Fig. 2

Fig. 3

Fig. 4

| bits | Nmin | Nmax | dfRFneg | dfRFpos |
|------|------|------|---------|---------|
| 6 | 32 | 64 | -8.000 | 8.119 |
| 7 | 64 | 128 | -3.914 | 3.950 |
| 8 | 128 | 256 | -1.960 | 1.967 |
| 9 | 256 | 512 | -0.977 | 0.973 |
| 10 | 512 | 1024 | -0.487 | 0.488 |
| 11 | 1024 | 2048 | -0.240 | 0.240 |
| 12 | 2048 | 4096 | -0.120 | 0.120 |

**Fig. 5**

**Fig. 6**

Fig. 7

Europäisches
Patentamt

European
Patent Office

Office européen
des brevets

# EUROPEAN SEARCH REPORT

Application Number

EP 10 15 2187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 289 464 A (WANG ROBERT C [US]) 22 February 1994 (1994-02-22) * column 2, line 30 - column 5, line 50 * ----- | 1-12 | INV. H04B1/28 H04B1/00 |
| X | EP 0 386 874 A2 (PLESSEY OVERSEAS [GB] PLESSEY SEMICONDUCTORS LTD [GB]) 12 September 1990 (1990-09-12) * column 2, line 38 - column 5, line 31; figures 1,2 * ----- | 1-12 | |
| A | US 7 403 756 B1 (JIACINTO JOSEPH F [US] ET AL) 22 July 2008 (2008-07-22) * column 2, line 49 - column 4, line 40; figures 1-3 * ----- | 1-12 | |

TECHNICAL FIELDS
SEARCHED (IPC)

H04B

The present search report has been drawn up for all claims

| Place of search | Date of completion of the search | Examiner |
|---|---|---|
| The Hague | 29 April 2010 | Andersen, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 15 2187

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2010

| Patent document cited in search report | | Publication date | Patent family member(s) | | Publication date |
|---|---|---|---|---|---|
| US 5289464 | A | 22-02-1994 | AU | 648472 B1 | 21-04-1994 |
| | | | CA | 2100901 A1 | 22-03-1994 |
| | | | EP | 0589594 A2 | 30-03-1994 |
| | | | JP | 2813115 B2 | 22-10-1998 |
| | | | JP | 6204958 A | 22-07-1994 |
| EP 0386874 | A2 | 12-09-1990 | AT | 123192 T | 15-06-1995 |
| | | | DE | 69019561 D1 | 29-06-1995 |
| | | | DE | 69019561 T2 | 28-09-1995 |
| | | | ES | 2072383 T3 | 16-07-1995 |
| | | | GB | 2229874 A | 03-10-1990 |
| | | | JP | 3198439 A | 29-08-1991 |
| | | | US | 5230086 A | 20-07-1993 |
| US 7403756 | B1 | 22-07-2008 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7190943 B2

- US 7358855 B2

**Non-patent literature cited in the description**

- **S. SIM et al.** A Three-Band-Tuner for Digital Terrestrial and Multistandard Reception. *IEEE Trans. Consumer Electronics,* August 2002, vol. 38 (3), 709-717

- **A. MAXIM et al.** A DDFS Driven Mixing-DAC with Image and Harmonic Rejection Capabilities. *Solid-State Circuits Conference, 2008, ISSCC 2008, Digest of Technical Papers, IEEE International,* 03 February 2008, 372-621